# EUROPÄISCHE PATENTSCHRIFT

(11) **EP 3 169 964 B1**
(45) Veröffentlichungstag und Bekanntmachung des Hinweises auf die Patenterteilung: **11.12.2019**
(21) Anmeldenummer: 15738065.0
(22) Anmeldetag: 13.07.2015
(51) Int. Cl.: F28F 9/00, F02B 29/04, F28F 9/22, F28F 9/24, F28D 7/16, F28D 21/00

(54) **WÄRMEÜBERTRAGER**
HEAT EXCHANGER
ÉCHANGEUR DE CHALEUR

(30) Priorität: 15.07.2014 DE 102014213718
(43) Veröffentlichungstag der Anmeldung: 24.05.2017
(73) Patentinhaber: Mahle International GmbH, 70376 Stuttgart (DE)
(72) Erfinder: RICHTER, Jens, 71723 Großbottwar (DE)
(74) Vertreter: Grauel, Andreas
(86) Internationale Anmeldenummer: PCT/EP2015/065987
(87) Internationale Veröffentlichungsnummer: WO 2016/008854

(56) Entgegenhaltungen:
- EP-A1- 1 707 911
- EP-A1- 2 728 155
- WO-A1-2011/061311
- DE-A1-102006 043 526
- DE-A1-102010 040 983
- FR-A1- 2 968 753
- JP-A- 2012 132 614

## Beschreibung

### Technisches Gebiet

Die Erfindung betrifft einen Wärmeübertrager zur Kühlung eines Medienstroms, mit einer Mehrzahl von Rohren, wobei die Rohre endseitig in jeweils einem Rohrboden aufgenommen sind, wobei die Rohre zwischen den beiden Rohrböden in einem Gehäuse aufgenommen sind, welches mit den Rohrböden fluiddicht verbunden ist, wobei entlang einer das Gehäuse begrenzenden Außenwandung ein Kühlmittelkanal durch eine nach außen gerichtete Ausprägung ausgebildet ist, wobei der Kühlmittelkanal eine in Richtung des innenvolumens des Gehäuses gerichtete Öffnung aufweist, über welche der Kühlmittelkanal mit dem Innenvolumen des Gehäuses in Fluidkommunikation steht.

### Stand der Technik

Die Ladeluft, welche in modernen Verbrennungsmotoren zur Erhöhung der Leistung mittels eines Turboladers genutzt wird, kann durch sogenannte Ladeluftkühler gekühlt werden, um eine möglichst große Leistungssteigerung zu ermöglichen. Hierzu kann ein Wärmeübertrag zwischen der Ladeluft und einem Kühlmittel in einem Ladeluftkühler erzeugt werden.

Die Ladeluft kann zur Abkühlung beispielsweise durch Rohre geleitet werden, welche von Kühlluft umströmt werden. Eine alternative Ausgestaltung eines Ladeluftkühlers sieht vor, dass die Ladeluft durch eine Mehrzahl von Rohren geströmt wird, während die Rohre mit einem flüssigen Kühlmittel umströmt werden. Das Kühlmittel selbst kann bevorzugt in einem weiteren Wärmeübertrager wieder abgekühlt werden, um dem Kühlmittel die Wärmemenge, welche es während des Wärmeübertrags von der Ladeluft aufgenommen hat, zu entziehen.

Die DE 10 2006 043 526 A1 zeigt einen Ladeluftkühler mit einer Mehrzahl von Rohren, welche zwischen zwei Sammelkästen verlaufen und die Sammelkästen strömungstechnisch miteinander verbinden. Durch die Sammelkästen und die Rohre kann die zu kühlende Ladeluft geströmt werden. Die Rohre führen ganz oder teilweise durch eine Kammer, welche mit einem Kühlmittel durchströmt werden kann. Auf diese Weise kann ein Wärmeübertrag zwischen der Ladeluft und dem Kühlmittel erzeugt werden, wodurch eine Abkühlung der Ladeluft erreicht werden kann.

Nachteilig an den Vorrichtungen im Stand der Technik ist, dass die Durchströmung des Wärmeübertragers mit dem Kühlmittel nicht optimal gestaltet ist, wodurch es zu sogenannten Todzonen kommen kann, welche dadurch gekennzeichnet sind, dass sie nicht oder nur in sehr geringem Ausmaß mit Kühlmittel durchströmt werden. Es kann daher zu Stauungen des Kühlmittels kommen.

Insbesondere durch die bei modernen Verbrennungsmotoren zunehmende Temperatur der Ladeluft an der Eingangsseite des Wärmeübertragers kann es zum Sieden des Kühlmittels kommen, was sich nachteilig auf die Kühlleistung des Wärmeübertragers auswirkt. Dieser Nachteil entsteht in Ladeluftkühlern, in welchen die Ladeluft und das Kühlmittel im Gegenstrom zueinander geführt werden, besonders häufig und ausgeprägt.

Das Dokument EP-A-2728155 zeigt einen Wärmeübertrager des nächstkommenden Stand der Technik.

### Darstellung der Erfindung, Aufgabe, Lösung, Vorteile

Daher ist es die Aufgabe der vorliegenden Erfindung einen Wärmeübertrager zu schaffen, welcher das Entstehen von Stauungen des Kühlmittels reduziert oder gänzlich vermeidet und so eine bessere Durchströmung des Wärmeübertragers mit dem Kühlmittel ermöglicht.

Die Aufgabe hinsichtlich des Wärmeübertragers wird durch einen Wärmeübertrager mit den Merkmalen von Anspruch 1 gelöst.

Ein Ausführungsbeispiel der Erfindung betrifft einen Wärmeübertrager zur Kühlung eines Medienstroms, mit einer Mehrzahl von Rohren, wobei die Rohre endseitig in jeweils einem Rohrboden aufgenommen sind, wobei die Rohre zwischen den beiden Rohrböden in einem Gehäuse aufgenommen sind, welches mit den Rohrböden fluiddicht verbunden ist, wobei entlang einer das Gehäuse begrenzenden Außenwandung ein Kühlmittelkanal durch eine nach außen gerichtete Ausprägung ausgebildet ist, wobei der Kühlmittelkanal eine in Richtung des Innenvolumens des Gehäuses gerichtete Öffnung aufweist, über welche der Kühlmittelkanal mit dem Innenvolumen des Gehäuses in Fluidkommunikation steht, wobei die Öffnung zumindest teilweise von einer Blende überdeckt ist, wobei die Blende an der nach innen gerichteten Fläche der Außenwandung des Gehäuses angeordnet ist, welche den Kühlmittelkanal aufweist, wobei zwischen einem die Öffnung begrenzenden Rand und der Blende ein Spalt ausgebildet ist.

Die Haupterstreckungsrichtung des Kühlmittelkanals verläuft vorzugsweise in einer Richtung quer zur Haupterstreckungsrichtung der Rohre. Der Kühlmittelkanal kann somit dazu genutzt werden, um das Kühlmittel über die Breite des Wärmeübertragers zu verteilen oder das Kühlmittel aus der Breite des Wärmeübertragers zu Sammeln und aus dem Wärmeübertrager abzuführen. Das Kühlmittel umströmt innerhalb des Wärmeübertragers die Rohre und strömt insbesondere in den Freiräumen, welche zwischen den Rohren ausgebildet sind.

Der Wärmeübertrager weist bevorzugt zwei sich gegenüberliegende Schmalseiten und zwei sich gegenüberliegende Breitseiten auf. Die Breite des Wärmeübertragers wird zwischen den sich gegenüberliegenden Schmalseiten gemessen, während die Höhe in Richtung Haupterstreckungsrichtung der Rohre gemessen wird. Die Tiefe des Wärmeübertragers wird zwischen den sich gegenüberliegenden Breitseiten gemessen.

Eine Blende, welche die zum Innenvolumen des Wärmeübertragers gerichtete Öffnung des Kühlmittelkanals zumindest teilweise überdeckt ist besonders vorteilhaft, da durch das Verkleinern des Öffnungsquerschnitts der Öffnung eine Drosselung der Kühlmittelströmung in den Kühlmittelkanal hinein oder aus dem Kühlmittelkanal heraus erreicht werden kann. Die Drosselung führt weiterhin zu einer Erhöhung des Strömungswiderstandes, was sich wiederum positiv auf die maximal erzielbare Kühlleistung auswirkt.

Weiterhin kann durch eine Blende die Strömungsrichtung des Kühlmittels beeinflusst werden. Insbesondere kann durch die Orientierung des Spaltes, welcher durch die nur teilweise Überdeckung der Öffnung des Kühlmittelkanals entsteht, die Strömung des Kühlmittels derart beeinflusst werden, dass eine stärkere Anströmung zumindest eines Rohrbodens erreicht wird. Besonders vorteilhaft ist es dabei, wenn der Rohrboden verstärkt mit dem Kühlmittel beaufschlagt wird, an dem im Betrieb die höheren Temperaturen entstehen. Bei einem im Gegenstrom durchströmten Wärmeübertrager ist dies aufgrund der hohen Temperaturen der zu kühlenden Luft der Rohrboden, welcher benachbart zum Kühlmittelauslass angeordnet ist.

Die Blende bildet bevorzugt auf der dem Rohrboden zugewandten Seite des Kühlmittelkanals einen Spalt aus, so dass das Kühlmittel entlang der Blende am Kühlmittelkanal vorbeiströmen kann und in Richtung des Rohrbodens weiterströmt, bevor es am Rohrboden umgelenkt wird und durch den Spalt in den Kühlmittelkanal überströmt.

Die Blende ist besonders vorteilhaft, um die Querschnittsfläche des Kühlmittelkanals möglichst groß zu belassen, um eine möglichst ungestörte Strömung innerhalb des Kühlmittelkanals zu gewährleisten, und gleichzeitig eine Drosselstelle auszubilden, welche den Druckverlust beim Überströmen des Kühlmittels zwischen dem Innenvolumen und dem Kühlmittelkanal erhöht, um eine gezielte Richtungsbeeinflussung der Kühlmittelströmung zu erreichen. Dies ist insbesondere vorteilhaft gegenüber einer lediglich kleineren Ausbildung des Kühlmittelkanals, die zu einer wesentlich schlechteren Verteilung des Kühlmittels entlang der Breite des Wärmeübertragers führen würde.

Weiterhin ist es zu bevorzugen, wenn der Kühlmittelkanal an einem von einem der Rohrböden abgeschlossenen ersten Endbereich des Gehäuses angeordnet ist. Dies ist besonders vorteilhaft, um die Überströmstelle des Kühlmittels aus dem Innenvolumen in den Kühlmittelkanal oder umgekehrt möglichst dicht an den Rohrböden auszubilden, um eine möglichst große vom Kühlmittel durchströmte Strömungsstrecke innerhalb des Wärmeübertragers auszubilden.

Besonders vorteilhaft ist es, wenn die Breite des Spaltes zwischen der Blende und dem die Öffnung begrenzenden Rand in Richtung der Haupterstreckungsrichtung des Kühlmittelkanals zunimmt oder abnimmt.

Durch eine entlang der Haupterstreckungsrichtung des Kühlmittelkanals abnehmende oder zunehmende Breite des Spaltes kann ein über die Breite des Wärmeübertragers variabler Druckverlust erzeugt werden, wodurch das Überströmen des Kühlmittels aus dem Innenvolumen in den Kühlmittelkanal zusätzlich begünstigt wird oder erschwert wird. Dies ist besonders vorteilhaft, um eine noch weitreichendere Beeinflussung der Kühlmittelströmung zu erreichen.

Auch ist es zu bevorzugen, wenn die Öffnung einen rechteckigen Querschnitt aufweist, wobei der Spalt zwischen der Blende und dem die Öffnung begrenzenden Rand ausgebildet ist, der dem ersten Endbereich des Gehäuses zugewandt ist.

Durch eine solche Anordnung des Spaltes kann erreicht werden, dass das Kühlmittel verstärkt im Innenvolumen des Wärmeübertragers an der Blende vorbeiströmt und erst nach dem Anströmen des Rohrbodens über den Spalt in den Kühlmittelkanal strömt. Auf diese Weise wird eine längere Strömungsstrecke für das Kühlmittel realisiert und gleichzeitig eine stärkere Anströmung des Rohrbodens. Dies führt zu einer höheren Wärmeaufnahme des Kühlmittels und zu einer verbesserten Wärmeabfuhr von dem Rohrboden.

Auch ist es vorteilhaft, wenn die Blende durch ein ebenes plattenartiges Element gebildet ist. Ein ebenes plattenartiges Element ist besonders vorteilhaft, um die Blende möglichst platzsparend auszubilden. Dadurch kann auch eine zusätzliche negative Beeinflussung der Kühlmittelströmung innerhalb des Wärmeübertragers infolge der Blende vermieden werden.

Weiterhin ist es zweckmäßig, wenn die den Kühlmittelkanal aufweisende Außenwandung des Gehäuses an ihrer Innenseite an dem die Öffnung begrenzenden Rand eine zumindest teilweise umlaufende Vertiefung aufweist, in welche die Blende einlegbar ist. Dies ist besonders vorteilhaft, um die Blende derart an die Innenseite der Außenwandung anzubinden, dass sie bündig mit der Wandung abschließt und keinen Überstand erzeugt. Bevorzugt weist die Vertiefung eine Tiefe auf, welche der Materialstärke der Blende entspricht. In einer alternativen Ausführung weist die Vertiefung eine Tiefe auf, welche der Materialstärke der Blende und einem zusätzlichen Dichtmittel entspricht. Durch die bündige Anlage der Blende kann eine flächige Anlage der Rohre an der Innenseite der Wandung und der Blende erreicht werden, wodurch die Abdichtung zwischen dem Gehäuse und den Rohren vereinfacht wird.

Auch ist es zu bevorzugen, wenn der Kühlmittelkanal in Fluidkommunikation mit einem in Verlängerung des Kühlmittelkanals angeordneten Fluidanschluss steht, wobei der Fluidanschluss als Fluideinlass oder als Fluidauslass ausgebildet ist.

Bevorzugt ist der Kühlmittelkanal in axialer Verlängerung eines Fluidanschlusses ausgebildet, so dass das Kühlmittel direkt aus dem Fluidanschluss in den Kühlmittelkanal oder umgekehrt strömen kann.

Weiterhin ist es besonders zweckmäßig, wenn der Fluidanschluss durch einen trichterförmigen Bereich mit dem Kühlmittelkanal in Fluidkommunikation steht, wobei ein Strömen des Kühlmittels zwischen dem Innenvolumen des Wärmeübertragers und dem Fluidanschluss vollständig über den Kühlmittelkanal erfolgt.

Durch eine fluiddichte Verbindung des Fluidanschlusses mit dem Kühlmittelkanal über einen trichterförmigen Bereich kann ein besonders strömungsgünstiger Übergang erreicht werden. Ein Überströmen zwischen dem Fluidanschluss und dem Innenvolumen vollständig durch den Kühlmittelkanal ist besonders vorteilhaft, um ein Umströmen der durch die Blende beziehungsweise durch den Spalt gebildeten Drosselstelle zu vermeiden.

Auch ist es zu bevorzugen, wenn der Kühlmittelkanal in Richtung seiner Haupterstreckungsrichtung vollständig von der Blende überdeckt ist. Dies ist vorteilhaft, um zu gewährleisten, dass ein Kühlmittelübertritt von dem Innenvolumen in den Kühlmittelkanal oder umgekehrt möglichst nahe an dem jeweils benachbarten Rohrboden stattfindet und insgesamt ein möglichst langer Strömungsweg für das Kühlmittel innerhalb des Wärmeübertragers erzeugt wird. Auf diese Weise kann die Kühlmittelströmung außerdem gezielt in Richtung des Rohrbodens gelenkt werden, wodurch die Wärmeabfuhr am Rohrboden verbessert wird.

Auch ist es zweckmäßig, wenn die Blende mit dem Gehäuse verschraubt ist. In alternativen Ausführungsformen kann die Blende auch mit dem Gehäuse verlötet sein oder durch andere aus dem Stand der Technik bekannte Befestigungsmittel mit dem Gehäuse verbunden sein.

Darüber hinaus ist es zu bevorzugen, wenn die Blende auf der dem Innenvolumen des Gehäuses und/oder auf der dem Kühlmittelkanal zugewandten Seite eine Wassersperre aufweist. Eine Wassersperre ist besonders vorteilhaft, um eine Leckageströmung entlang der Auflageflächen der Blende am Gehäuse zu vermeiden. Die Wassersperre wirkt als Abdichtung, um einen gezielten Transport des Kühlmittels durch den Spalt zu gewährleisten.

Weiterhin ist es zweckmäßig, wenn der Kühlmittelkanal einen Bypass ausbildet, durch welchen das Kühlmittel an den im Gehäuse angeordneten Rohren vorbei und in die zwischen den Rohren ausgebildeten Freiräume strömbar ist. Der Kühlmittelkanal dient bevorzugt einer Verteilung beziehungsweise einer Sammlung des Kühlmittels über die Breite des Wärmeübertragers. Dabei tritt das Kühlmittel aus dem Kühlmittelkanal in die zwischen den Rohren gebildeten Freiräume über oder strömt aus diesen Freiräumen heraus in den Kühlmittelkanal.

Auch ist es vorteilhaft, wenn die Blende die Öffnung des Kühlmittelkanals an einem als Fluidauslass dienenden Fluidanschluss zumindest teilweise überdeckt, wobei das Kühlmittel aus Richtung des zum Kühlmittelkanal benachbarten Rohrbodens entlang des Spaltes in den Kühlmittelkanal strömbar ist. Dies ist insbesondere vorteilhaft, um zu erreichen, dass die Kühlmittelströmung vor dem Überströmen in den Kühlmittelkanal zuerst zu dem benachbart angeordneten Rohrboden gelenkt wird. Insbesondere da die Wärmeübertrager bevorzugt in einem Gegenstromprinzip durchströmt sind, entsteht an dem Rohrboden, welcher benachbart zum Kühlmittelauslass angeordnet ist, eine besonders hohe Temperatur infolge der in die Rohre einströmenden heißen Luft.

Weiterhin ist es zu bevorzugen, wenn das Gehäuse an jeder der Schmalseiten einen Fluidanschluss aufweist, wobei jeweils in axialer Verlängerung der Fluidanschlüsse ein durch eine Ausprägung nach außen an einer Breitseite des Gehäuses erzeugter Kühlmittelkanal angeordnet ist, wobei die Kühlmittelkanäle an der gleichen Breitseite des Gehäuses angeordnet sind. Die Anordnung der Fluidanschlüsse an sich gegenüberliegenden Schmalseiten ist besonders vorteilhaft, um eine optimale Verteilung des Kühlmittels über die gesamte Breite des Wärmeübertragers zu erhalten.

Auch ist es vorteilhaft, wenn das Gehäuse zwei Kühlmittelkanäle aufweist, wobei einer der Kühlmittelkanäle mit einem Fluidauslass in Fluidkommunikation steht und der andere Kühlmittelkanal mit einem Fluideinlass in Fluidkommunikation steht, wobei einer oder beide Kühlmittelkanäle von einer Blende zumindest teilweise überdeckt sind. Dies ist vorteilhaft, um am Kühlmitteleintritt und/oder am Kühlmittelaustritt eine möglichst optimale Lenkung der Kühlmittelströmung zu erreichen und so den Wärmeübertrag zwischen der Luft und dem Kühlmittel zu verbessern. Insbesondere ist es dabei vorteilhaft, wenn durch die Anordnung der Blende/-n die Strömungsstrecke des Kühlmittels innerhalb des Wärmeübertragers vergrößert wird und ein Rohrboden oder beide Rohrböden verstärkt von dem Kühlmittel angeströmt werden, um einen besseren Wärmeabtransport von den Rohrböden zu erzeugen.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Seitenansicht eines Wärmeübertragers mit einer Blende, welche einen der Kühlmittelkanäle zumindest teilweise überdeckt,
- Fig. 2: eine Detailansicht eines durch eine Ausprägung des Gehäuses erzeugten Kühlmittelkanals,
- Fig. 3: eine Detailansicht der Blende, welche den Kühlmittelkanal zumindest teilweise überdeckt,
- Fig. 4: eine Ansicht des Bereichs des Wärmeübertragers, welcher den von der Blende überdeckten Kühlmittelkanal aufweist,
- Fig. 5: eine perspektivische Ansicht des Wärmeübertragers, wobei das die Rohre umschließende Gehäuse nicht vollständig dargestellt ist,
- Fig. 6: eine perspektivische Ansicht des Wärmeübertragers, wobei die Rohrböden, in welchen die Rohre endseitig aufgenommen sind, dargestellt sind,
- Fig. 7: eine Seitenansicht des Wärmeübertragers, wobei im rechten Teilbereich der Figur 7 eine Schnittansicht durch den Wärmeübertrager entlang der Haupterstreckungsrichtung der Rohre gezeigt ist und im unteren Teilbereich eine Schnittansicht entlang einer Richtung quer zur Haupterstreckungsrichtung der Rohre,
- Fig. 8: eine Detailansicht des Kühlmittelkanals, welcher zumindest teilweise von der Blende überdeckt ist,
- Fig. 9: im linken Teilbereich eine Seitenansicht des Wärmeübertragers und im rechten Teilbereich eine Schnittansicht durch den Wärmeübertrager entlang der Haupterstreckungsrichtung der Rohre,
- Fig. 10: eine Detailansicht gemäß Figur 8, wobei die Rohre des Wärmeübertragers nicht dargestellt sind,
- Fig. 11: eine Seitenansicht auf die Breitseite des Wärmeübertragers, wobei die Blende montiert ist und den unteren Kühlmittelkanal zumindest teilweise überdeckt,
- Fig. 12: eine Ansicht einer rechteckigen plattenartigen Blende,
- Fig. 13: eine Ansicht einer alternativ ausgestalteten Blende mit zumindest einer schräg verlaufenden Außenkante,
- Fig. 14: eine Darstellung der Geschwindigkeitsvektoren der Kühlmittelströmung innerhalb des Wärmeübertragers, wobei der Kühlmittelkanal an der Kühlmittelaustrittsseite nicht durch eine Blende überdeckt ist, und
- Fig. 15: eine Darstellung der Geschwindigkeitsvektoren der Kühlmittelströmung innerhalb des Wärmeübertragers, wobei die Blende über dem Kühlmittelkanal an der Kühlmittelaustrittsseite angeordnet ist.

### Bevorzugte Ausführung der Erfindung

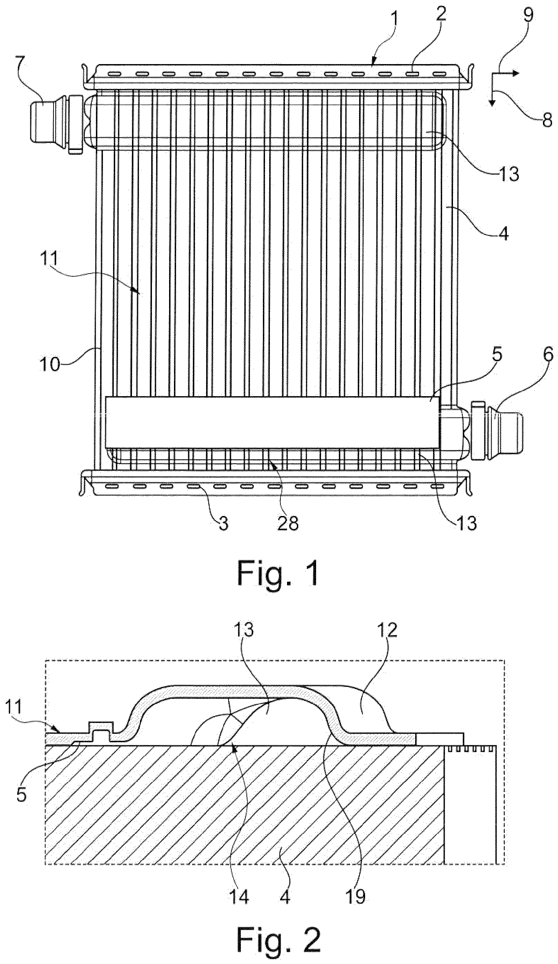

Die Figur 1 zeigt eine Ansicht eines Wärmeübertragers 1. Der Wärmeübertrager 1 ist aus einer Mehrzahl von parallel zueinander angeordneten Rohren 4 gebildet, welche endseitig jeweils in einem oben liegenden Rohrboden 2 und einem unten liegenden Rohrboden 3 aufgenommen sind. In der Darstellung der Figur 1 ist das Gehäuse, welches die Rohre 4 umschließt nicht dargestellt. Am oberen linken Endbereich ist ein Fluidanschluss 7 dargestellt und am unteren rechten Endbereich ein zweiter Fluidanschluss 6. In einer vorteilhaften Ausführungsform dient der Fluidanschluss 7 dem Zuführen des Kühlmittels, während der Fluidanschluss 6 dem Abführen des Kühlmittels aus dem Wärmeübertrager 1 dient. Das Gehäuse weist einen ersten Endbereich 28 auf, welcher den Endbereich des Gehäuses darstellt, der durch den Rohrboden 3 abgeschlossen ist. Der Rohrboden 3 ist dabei benachbart zum als Fluidauslass ausgebildeten Fluidanschluss 6 angeordnet. Insbesondere an diesem Rohrboden 3 entstehen besonders hohe Temperaturen, welche zu einem Sieden des Kühlmittels führen können.

Der Wärmeübertrager 1 weist zwei sich gegenüberliegende Schmalseiten 10 auf und zwei sich ebenfalls gegenüberliegende Breitseiten 11. Entlang der Breitseiten 11 sind die vorzugsweise als Flachrohre ausgebildeten Rohre 4 nebeneinander angeordnet. Die Schmalseiten 10 und die Breitseiten 11 bilden die Außenwandungen des Gehäuses aus.

Die Rohre 4 werden von einem Medienstrom durchströmt, welcher vorzugsweise durch Luft gebildet ist, die als Ladeluft zur Aufladung eines Verbrennungsmotors genutzt wird. Im nachfolgenden wird stets Luft als das durch die Rohre strömende Medium genannt, wobei dies keine Beschränkung auf Luft darstellt. Das Gehäuse des Wärmeübertragers 1 wird mit einem Kühlmittel durchströmt, wodurch insbesondere die Luft innerhalb der Rohre 4 abgekühlt wird.

Im Inneren des Wärmeübertragers 1 ist eine rechteckige plattenartige Blende 5 angeordnet. Diese ist mit einer der Innenflächen des nicht gezeigten Gehäuses verbunden, beispielsweise verschraubt oder vertoxt und überdeckt insbesondere einen Teilbereich einer nach innen gerichteten Öffnung des Kühlmittelkanals 13, welcher in die Außenwandung des Gehäuses eingeformt ist.

Sowohl in Verlängerung des Fluidanschlusses 7 als auch in Verlängerung des Fluidanschlusses 6 ist ein Kühlmittelkanal 13 in die Außenwandung des Gehäuses eingeformt. Die Kühlmittelkanäle 13 können je nach Durchströmungsrichtung entweder zur Verteilung des Kühlmittels entlang der Breitseite 11 des Wärmeübertragers 1 genutzt werden oder zur Sammlung des Kühlmittels entlang der Breitseite 11.

In Figur 1 ist die Blende 5 über dem Kühlmittelkanal 13 angeordnet, welcher dem Fluidauslass 6 zugeordnet ist. In alternativen Ausführungsformen kann auch der Kühlmittelkanal des Fluideinlasses mit einer Blende teilweise überdeckt sein.

Weiterhin ist in Figur 1 ein Koordinatensystem mit den Raumrichtungen 8 und 9 dargestellt. Die Raumrichtung 8 verläuft parallel zur Haupterstreckungsrichtung der Rohre 4, während die Raumrichtung 9 quer zu den Rohren 4 entlang der Breite des Wärmeübertragers verläuft. Entlang der Raumrichtung 9 erstrecken sich die beiden Breitseiten 11 des Wärmeübertragers 1. Die beiden Raumrichtungen 8 und 9 werden auch für die Ausführungsbeispiele der nachfolgenden Figuren zugrunde gelegt.

Die Figur 2 zeigt eine Detailansicht eines Kühlmittelkanals 13. Wie in Figur 2 zu erkennen ist, ist der Kühlmittelkanal 13 durch eine Ausprägung des Gehäuses 12 nach außen hin weg von den Rohren 4 gebildet. Der Kühlmittelkanal 13 ist an einer der Breitseiten 11 des Gehäuses 12 ausgebildet. Der Kühlmittelkanal 13 weist eine nach innen gerichtete Öffnung 14 auf, welche durch den umlaufenden Rand 19 begrenzt ist. Durch die Öffnung 14 beziehungsweise den nicht von der Blende 5 überdeckten Querschnitt der Öffnung 14 kann das Kühlmittel zwischen dem Kühlmittelkanal 13 und dem Innenvolumen des Gehäuses 12 überströmen.

Das Innenvolumen des Gehäuses 12 ist im Wesentlichen durch die zwischen den Rohren 4 ausgebildeten Freiräume gebildet. Da das Gehäuse 12 an den Schmalseiten der Rohre 4 anliegt, kann eine Durchströmung des Innenvolumens innerhalb des Gehäuses 12 nur entlang der Freiräume zwischen den Rohren 4 erfolgen. Je nach Durchströmungsrichtung kann das Kühlmittel aus dem Kühlmittelkanal 13 in die Freiräume zwischen den Rohren 4 überströmen oder aus den Freiräumen in den Kühlmittelkanal 13 überströmen.

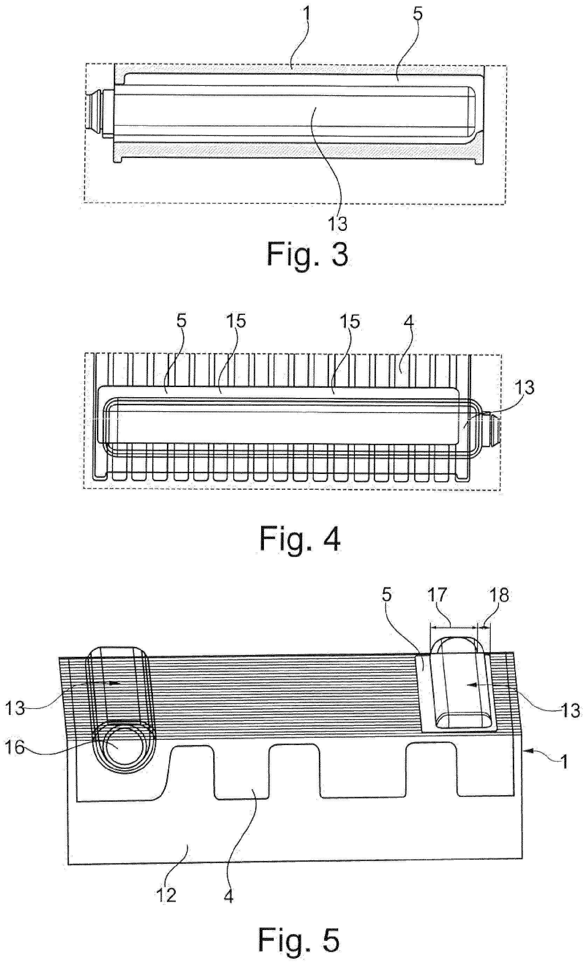

Die Figur 3 zeigt eine Detailansicht des Kühlmittelkanals 13, welcher von der Blende 5 teilweise überdeckt ist. In Figur 3 ist der untere Teilbereich des Wärmeübertragers 1 der Figur 1 dargestellt. Die Blende 5 dient als Sperre für das Kühlmittel zur Verbesserung der Strömungsverteilung.

Die Figur 4 zeigt eine weitere Detailansicht, wobei die Blende 5 zu erkennen ist, welche über die Bohrungen 15 mit dem Gehäuse 12, welches in Figur 4 nicht gezeigt ist, verbunden werden kann. Im Hintergrund hinter der Blende 5 sind die Rohre 4 sowie die zwischen den Rohren 4 ausgebildeten Freiräume zu erkennen. Wie in Figur 4 zu erkennen ist, wird nicht die gesamte Öffnung des Kühlmittelkanals 13 von der Blende 5 überdeckt, sondern nur ein definierter Teilbereich. Insbesondere entlang des unteren Randbereichs des Kühlmittelkanals 13 entsteht ein Spalt zwischen der Blende 5 und dem die Öffnung begrenzenden Rand, welcher durch die Wandung des Gehäuses 12 gebildet ist. Durch diesen Spalt, welcher in den nachfolgenden Figuren im Detail gezeigt ist, kann ein Kühlmittelübertritt in den Kühlmittelkanal 13 hinein oder aus diesem heraus realisiert werden.

Die Figur 5 zeigt eine weitere Ansicht eines Wärmeübertragers 1, wobei das Gehäuse 12 nur teilweise angedeutet ist. Der Wärmeübertrager 1 ist in Figur 5 liegend dargestellt.

Die beiden Kühlmittelkanäle 13, welche an der nach oben gerichteten Breitseite 11 ausgebildet sind, sind in der Figur 5 durch Strichzeichnungen angedeutet. Am linken Kühlmittelkanal 13 ist insbesondere die Öffnungsquerschnittsfläche des Fluidanschlusses 7 mit dem Bezugszeichen 16 dargestellt.

Wie in Figur 5 zu erkennen ist, überdeckt die Blende 5 nur einen Teilbereich der Öffnung des rechten Kühlmittelkanals 13. Der überdeckte Bereich, insbesondere entlang der Raumrichtung 8, ist mit dem Bezugszeichen 17 dargestellt. Der Spalt, welcher eine Übertrittsfläche zwischen den Freiräumen zwischen den Rohren 4 und dem Kühlmittelkanal 13 bildet, ist mit dem Bezugszeichen 18 dargestellt. Der geöffnete Spalt 18 wirkt insbesondere als Drosselstelle, da er die eigentliche Übertrittsfläche vom Innenvolumen des Wärmeübertragers 1 in den Kühlmittelkanal 13 hinein deutlich reduziert. Durch das Vorsehen einer Blende 5 kann eine Drosselstelle erzeugt werden, ohne den eigentlichen Strömungsquerschnitt des Kühlmittelkanals 13 zu verändern, wodurch weiterhin eine optimale Durchströmung des Kühlmittelkanals 13 gewährleistet ist.

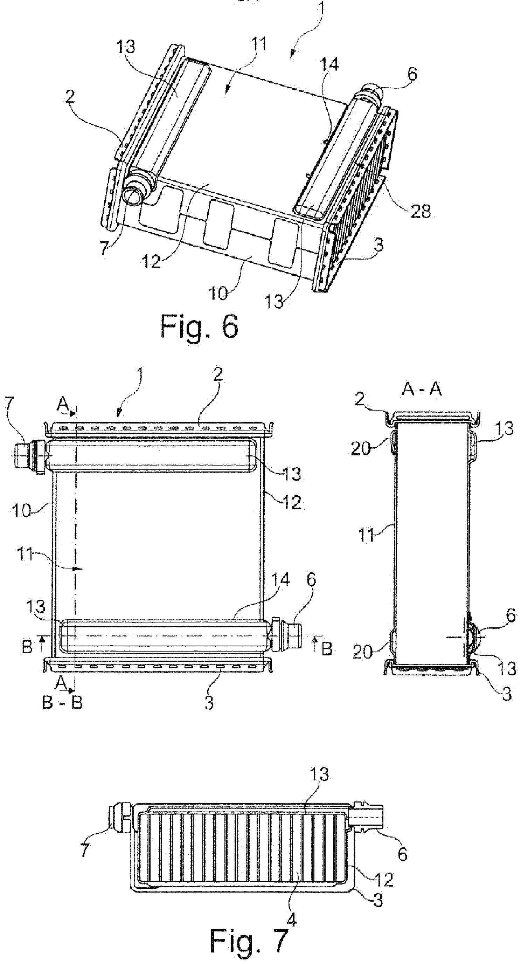

Die Figur 6 zeigt eine weitere perspektivische Ansicht des Wärmeübertragers 1. Es ist das Gehäuse 12 mit den beiden ausgeprägten Kühlmittelkanälen 13 und den in Verlängerung der jeweiligen Kühlmittelkanäle 13 angeordneten Fluidanschlüssen 6 und 7 sowie die beiden Rohrböden 2 und 3 dargestellt. Die Kühlmittelkanäle 13 sind beide an der gleichen Breitseite 11 des Wärmeübertragers 1 angeordnet, während die Fluidanschlüsse 6 und 7 an jeweils gegenüberliegenden Schmalseiten 10 angeordnet sind. Der erste Endbereich 28 des Gehäuses stellt den Endbereich dar, an welchem aufgrund der Strömung der Luft in den Rohren besonders hohe Temperaturen entstehen.

Die Figur 7 zeigt im linken oberen Bereich eine Seitenansicht des Wärmeübertragers 1 gemäß der Figur 6. Im linken oberen Bereich der Figur 7 ist entlang des Wärmeübertragers 1 die Schnittebene A-A dargestellt, welche entlang der Haupterstreckungsrichtung 8 der Rohre 4 verläuft. Weiterhin ist die Schnittebene B-B dargestellt, welche entlang der Raumrichtung 9 verläuft. Im rechten Teil der Figur 7 ist der Schnitt A-A durch den Wärmeübertrager 1 gezeigt. In ihm ist zu erkennen, dass ungefähr auf gleicher Höhe gegenüberliegend von den Kühlmittelkanälen 13 auf der gegenüberliegenden Breitseite 11 jeweils eine weitere Ausprägung 20 vorgesehen ist, welche ebenfalls von dem Kühlmittel innerhalb des Wärmeübertragers 1 durchströmt werden kann. Sowohl die Kühlmittelkanäle 13 als auch die Ausprägungen 20 können sich über einen weiten Teilbereich der Breitseiten 11 erstrecken, so dass in diesen Bereichen 13, 20 ein Überströmen des Kühlmittels zwischen den Freiräumen, welche zwischen den Rohren 4 ausgebildet sind, möglich ist.

Im unteren Teil der Figur 7 ist der Schnitt B-B dargestellt, welcher den unteren Kühlmittelkanal 13 und den Fluidanschluss 6 schneidet. In dem Schnitt B-B sind die parallel zueinander angeordneten Flachrohre 4 gezeigt, welche in dem Gehäuse 12 aufgenommen sind. Im linken Bereich des Schnittes B-B ist der Fluidanschluss 7 dargestellt.

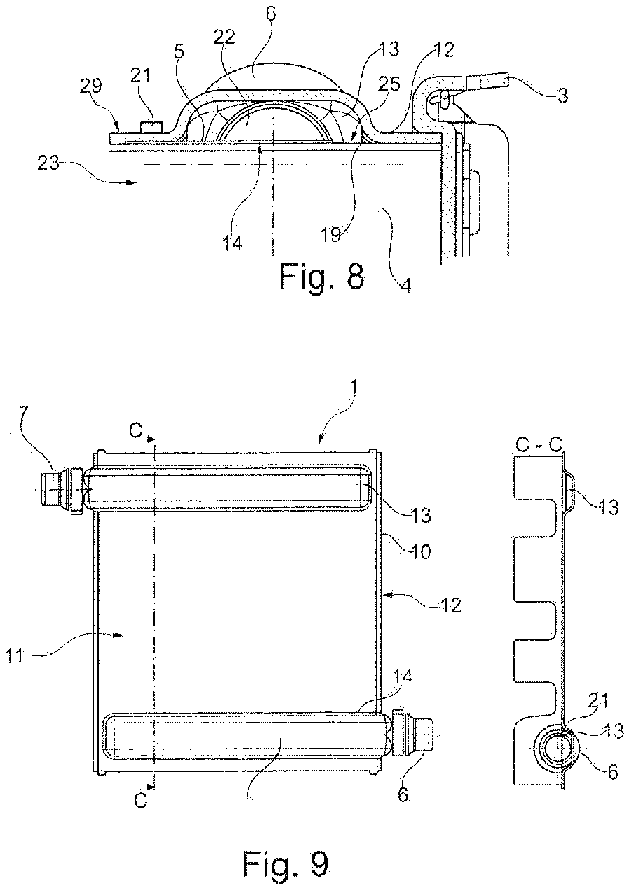

Die Figur 8 zeigt eine Detailansicht des Kühlmittelkanals 13 am Fluidanschluss 6. Ein Teil des Fluidanschlusses 6 ist von den Rohren 4 überdeckt. Im Ausführungsbeispiel der Figur 8 ist die Blende 5 am Gehäuse 12 fixiert. Die Blende 5 erstreckt sich parallel zur Haupterstreckungsrichtung der Rohre 4 über einen großen Teilbereich der Öffnung 14 des Kühlmittelkanals 13. Zwischen dem die Öffnung 14 begrenzenden Rand 19, welcher durch die Wandung des Gehäuses 12 gebildet ist, und der Blende 5 entsteht ein Spalt 25, welcher eine Übertrittsfläche zwischen dem Kühlmittelkanal 13 und dem Innenvolumen 23 des Wärmeübertragers 1 bildet. Am rechten Endbereich der Figur 8 ist der Rohrboden 3 angedeutet, in welchem die Rohre 4 endseitig aufgenommen sind.

Der Fluidanschluss 6 geht durch einen trichterförmigen Bereich in den durch die Blende 5 zumindest teilweise begrenzten Kühlmittelkanal 13 über. Das direkt benachbart zum Fluidanschluss 6 angeordnete Rohr 4 kann mit seiner dem Fluidanschluss 6 zugewandten Wandung einen Teil des trichterförmigen Bereichs ausbilden. Der trichterförmige Bereich wird weiterhin durch die Innenwandungen des Gehäuses 12 begrenzt, wodurch das Kühlmittel aus dem Fluidanschluss 6 nur direkt in den Kühlmittelkanal 13 überströmen kann oder umgekehrt.

Die Blende 5 ist in eine Vertiefung 29 eingelegt, welche zumindest teilweise umlaufend um die Öffnung 14 ausgebildet ist. Durch das Einlegen in die Vertiefung 29 schließt die zum Innenvolumen 23 des Wärmeübertragers gerichtete Seite der Blende 5 bündig mit der den Kühlmittelkanal 13 aufweisenden Wandung ab. Dadurch ist eine besonders passgenaue und abdichtende Anlage der Rohre 4 an der Innenseite des Gehäuses 12 möglich.

Die Figur 9 zeigt im linken Bereich eine Seitenansicht auf eine Breitseite 11 des Wärmeübertragers 1. Im Bereich des unteren Kühlmittelkanals 13 sind mit dem Bezugszeichen 14 die Bohrungen im Gehäuse 12 dargestellt, an welchen die Blende 5 befestigt werden kann. Im linken Teil der Figur 9 ist der Schnitt C-C dargestellt, welcher entlang der Raumrichtung 8 durch den Wärmeübertrager 1 führt.

Im Schnitt C-C sind die beiden Kühlmittelkanäle 13 zu erkennen sowie der Fluidanschluss 6. Weiterhin ist die Verbindung 21 dargestellt, mit welcher die Blende 5 gegenüber dem Gehäuse 12 fixiert ist.

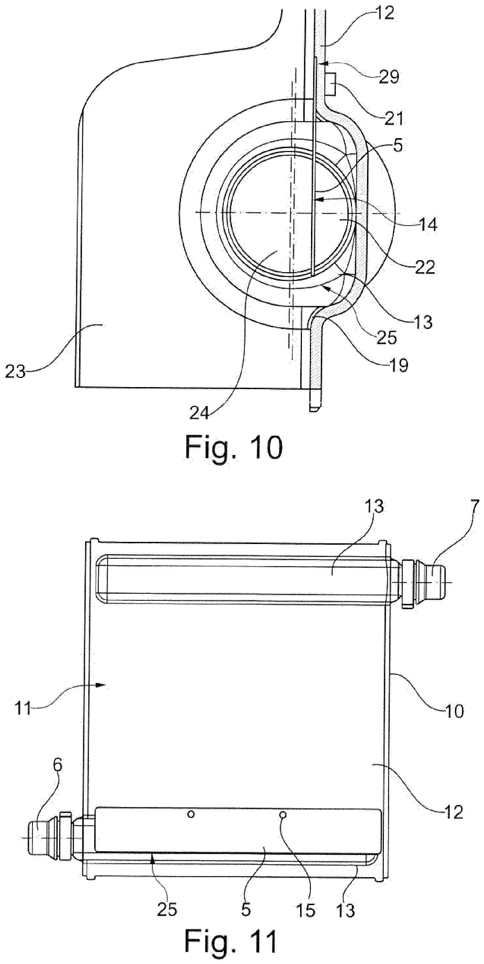

Die Figur 10 zeigt eine Detailansicht des Kühlmittelkanals 13 mit der montierten Blende 5, welche über die Verbindung 21 mit dem Gehäuse 12 verbunden ist. In der Darstellung der Figur 10 sind im Vergleich zur Figur 8 die Rohre 4 im Innenvolumen 23 nicht dargestellt. Weiterhin ist der Spalt 25 zu erkennen, welcher zwischen der Blende 5 und dem die Öffnung des Kühlmittelkanals 13 begrenzenden Rand ausgebildet ist.

Die Figur 11 zeigt eine Seitenansicht gemäß der linken Darstellung der Figur 9. In Figur 11 ist die Blende 5 montiert und entlang der Bohrungen 15 mit dem Gehäuse 12 des Wärmeübertragers 1 verbunden. In Figur 11 ist der unten liegende Spalt 25 zu erkennen, welcher als Übertritt zwischen dem Kühlmittelkanal 13 und dem Innenvolumen des Wärmeübertragers 1 dient. Wie in Figur 11 weiterhin zu erkennen ist, ist entlang der Raumrichtung 9 eine Beabstandung der Blende 5 gegenüber der Innenwandung des Gehäuses 12 ausgebildet. Dieser Abstand kann beispielsweise durch eines der Rohre im Inneren des Wärmeübertragers 1 überdeckt werden. Insbesondere entlang dieser Beabstandung kann der trichterförmige Bereich ausgebildet sein, welcher den Übergang zwischen dem Fluidanschluss 6 und dem Kühlmittelkanal 13 bildet. Ein Überströmen des Kühlmittels in das Innenvolumen im Bereich dieser Beabstandung ist bevorzugt durch Wandungen, wie beispielsweise den Wandungen eines Rohres 4, verhindert,

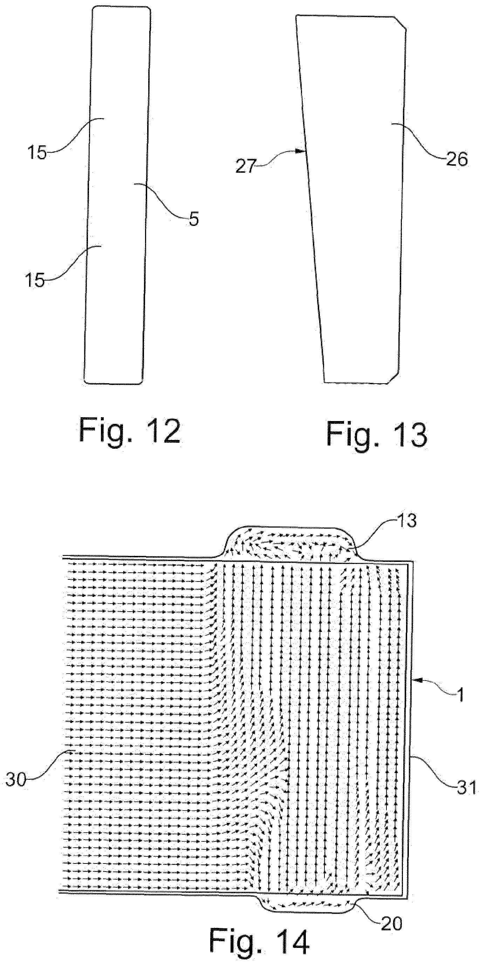

Die Figur 12 zeigt eine Ansicht der rechteckigen plattenartigen Blende 5 mit den Bohrungen 15, über welche die Blende 5 an dem Gehäuse 12 befestigt werden kann.

Die Blende 5 ist insbesondere durch ein plattenartiges Element gebildet, welches große Erstreckungen entlang zweier Raumrichtungen aufweist, während die Erstreckung in der dritten Raumrichtung, welche in Figur 12 als Flächennormale auf der Zeichnungsebene ausgebildet ist, wesentlich geringer ist als in den anderen beiden Raumrichtungen.

Die Figur 13 zeigt eine alternativ ausgeformte Blende 26, welche insbesondere dadurch gekennzeichnet ist, dass eine der Kanten entlang der Haupterstreckungsrichtung der Blende 26 einen schrägen Verlauf aufweist. Auf diese Weise wird erreicht, dass sich der Spalt, welcher sich zwischen dem Kühlmittelkanal 13 und der Blende 26 ausbildet, mit zunehmender Entfernung vom Fluidanschluss verkleinert oder vergrößert. Dies ist von der Ausrichtung der Blende 26 relativ zum Fluidanschluss abhängig. Weiterhin weist die Blende 26 an dem nach rechts gerichteten Endbereich abgeschrägte Ecken auf. Die Blende kann in einer alternativen Ausführungsform auch eine Kante mit einem gezackten Verlauf aufweisen, so dass der Spalt einseitig durch eine Zackenkontur begrenzt wird.

Die Figur 14 zeigt eine Darstellung von Geschwindigkeitsvektoren 30 der Kühlmittelströmung innerhalb des Wärmeübertragers 1. In Figur 14 ist ein Wärmeübertrager 1 ohne Blende vor dem Kühlmittelkanal 13 dargestellt. Es ist zu erkennen, dass die Vektoren 30 derart ausgerichtet sind, dass der Kühlmittelstrom hauptsächlich direkt zum Kühlmittelkanal 13 weist und nur ein geringer Anteil des Kühlmittels hin zum Bodenbereich 31 geleitet wird. Der Bodenbereich 31 entspricht dem Bereich, in welchem die Rohre in den Rohrboden aufgenommen sind.

Aufgrund der Durchströmung des Wärmeübertragers 1 im Gegenstrom entstehen insbesondere an dem Bodenbereich 31, welcher benachbart zur Kühlmittelaustrittsseite angeordnet ist, hohe Temperaturen durch die heiße Luft, welche in dem Bereich 31 in die Rohre einströmt. Dadurch kann es in dem Bereich 31 zu einem Sieden des Kühlmittels kommen, was nachteilig hinsichtlich der erzielbaren Kühlleistung ist. Je mehr Kühlmittel dem Bodenbereich 31 zugeführt wird, desto besser kann die Wärme der heißen Luft abgeführt werden, wodurch eine höhere Kühlleistung im Wärmeübertrager 1 erzeugt werden kann.

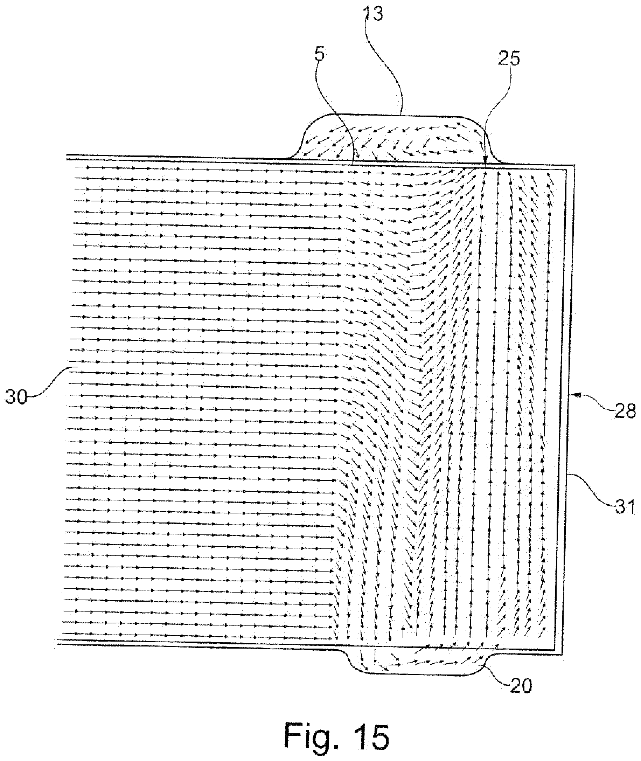

Die Figur 15 zeigt eine Darstellung der Geschwindigkeitsvektoren 30 in einem Wärmeübertrager 1 mit einer installierten Blende 5. In der Figur 15 ist zu erkennen, dass eine stärkere Verteilung des Kühlmittels hin zum Bodenbereich 31 und hin zu der gegenüber des Kühlmittelkanals 13 ausgebildeten Ausformung 20 geschieht. Das Kühlmittel strömt dadurch verstärkt entlang des Bodenbereichs 31, bevor es durch den Spalt 25 in den Kühlmittelkanal 13 überströmt. Somit wird eine günstige Beeinflussung der Kühlmittelströmung innerhalb des Wärmeübertragers 1 erzeugt, wodurch ein stärkerer Wärmeabtransport realisiert werden kann und das Sieden des Kühlmittels deutlich reduziert oder gänzlich verhindert werden kann. Durch die Blende 5 wird somit eine stärkere Durchströmung des ersten Endbereichs 28 des Gehäuses erreicht.

Die einzelnen Merkmale der Ausführungsbeispiele der vorausgegangenen Figuren 1 bis 15 können insbesondere auch untereinander kombiniert werden. Die Figuren 1 bis 15 haben hinsichtlich der Materialwahl, der Ausformung der einzelnen Elemente sowie der Anordnung der einzelnen Elemente relativ zueinander keinen beschränkenden Charakter. Die Figuren 1 bis 15 dienen zur Verdeutlichung des Erfindungsgedankens und beschränken die Lösung nicht auf die gezeigten Ausführungsbeispiele.

## Patentansprüche

1. Wärmeübertrager (1) zur Kühlung eines Medienstroms, mit einer Mehrzahl von Rohren (4), wobei die Rohre (4) endseitig in jeweils einem Rohrboden (2, 3) aufgenommen sind, wobei die Rohre (4) zwischen den beiden Rohrböden (2, 3) in einem Gehäuse (12) aufgenommen sind, welches mit den Rohrböden (2, 3) fluiddicht verbunden ist, wobei entlang einer das Gehäuse (12) begrenzenden Außenwandung ein Kühlmittelkanal (13) durch eine nach außen gerichtete Ausprägung ausgebildet ist, wobei der Kühlmittelkanal (13) eine in Richtung des Innenvolumens des Gehäuses (12) gerichtete Öffnung (14) aufweist, über welche der Kühlmittelkanal (13) mit dem Innenvolumen (23) des Gehäuses (12) in Fluidkommunikation steht, **dadurch gekennzeichnet, dass** die Öffnung (14) zumindest teilweise von einer Blende (5) überdeckt ist, wobei die Blende (5) an der nach innen gerichteten Fläche der Außenwandung des Gehäuses (12) angeordnet ist, welche den Kühlmittelkanal (13) aufweist, wobei zwischen einem die Öffnung (14) begrenzenden Rand (19) und der Blende (5) ein Spalt (18, 25) ausgebildet ist.

2. Wärmeübertrager (1) nach Anspruch 1, **dadurch gekennzeichnet, dass** der Kühlmittelkanal (13) an einem von einem der Rohrböden (3) abgeschlossenem ersten Endbereich (28) des Gehäuses (12) angeordnet ist.

3. Wärmeübertrager (1) nach einem der vorhergehenden Ansprüche, **dadurch gekennzeichnet, dass** die Breite des Spaltes zwischen der Blende (26) und dem die Öffnung begrenzenden Rand in Richtung der Haupterstreckungsrichtung des Kühlmittelkanals zunimmt oder abnimmt.

4. Wärmeübertrager (1) nach Anspruch 2, **dadurch gekennzeichnet, dass** die Öffnung (14) einen rechteckigen Querschnitt aufweist, wobei der Spalt (18, 25) zwischen der Blende (5) und dem die Öffnung (14) begrenzenden Rand (19) ausgebildet ist, der dem ersten Endbereich (28) des Gehäuses (12) zugewandt ist.

5. Wärmeübertrager (1) nach einem der vorhergehenden Ansprüche, **dadurch gekennzeichnet, dass** die Blende (5, 26) durch ein ebenes plattenartiges Element gebildet ist.

6. Wärmeübertrager (1) nach einem der vorhergehenden Ansprüche, **dadurch gekennzeichnet, dass** die den Kühlmittelkanal (13) aufweisende Außenwandung des Gehäuses (12) an ihrer Innenseite an dem die Öffnung (14) begrenzenden Rand (19) eine zumindest teilweise umlaufende Vertiefung (29) aufweist, in welche die Blende (5) einlegbar ist.

7. Wärmeübertrager (1) nach einem der vorhergehenden Ansprüche, **dadurch gekennzeichnet, dass** der Kühlmittelkanal (13) in Fluidkommunikation mit einem in Verlängerung des Kühlmittelkanals (13) angeordneten Fluidanschluss (6, 7) steht, wobei der Fluidanschluss (6, 7) als Fluideinlass (7) oder als Fluidauslass (6) ausgebildet ist.

8. Wärmeübertrager (1) nach Anspruch 7, **dadurch gekennzeichnet, dass** der Fluidanschluss (6, 7) durch einen trichterförmigen Bereich mit dem Kühlmittelkanal (13) in Fluidkommunikation steht, wobei ein Strömen des Kühlmittels zwischen dem Innenvolumen (23) des Wärmeübertragers (1) und dem Fluidanschluss (6, 7) vollständig über den Kühlmittelkanal (13) erfolgt.

9. Wärmeübertrager (1) nach einem der vorhergehenden Ansprüche, **dadurch gekennzeichnet, dass** der Kühlmittelkanal (13) in Richtung seiner Haupterstreckungsrichtung vollständig von der Blende (5) überdeckt ist.

10. Wärmeübertrager (1) nach einem der vorhergehenden Ansprüche, **dadurch gekennzeichnet, dass** das Gehäuse (12) zwei Kühlmittelkanäle (13) aufweist, wobei einer der Kühlmittelkanäle mit einem Fluidauslass (6) in Fluidkommunikation steht und der andere Kühlmittelkanal mit einem Fluideinlass (7) in Fluidkommunikation steht, wobei einer oder beide Kühlmittelkanäle (13) von einer Blende (5) zumindest teilweise überdeckt sind.

## Claims

1. A heat exchanger (1) for cooling a media flow, with a plurality of tubes (4), wherein the tubes (4) are received at the ends in a respective tube sheet (2, 3), wherein the tubes (4) between the two tube sheets (2, 3) are received in a housing (12) which is connected to the tube sheets (2, 3) in a fluid-tight manner, wherein a coolant channel (13) is formed by an outwardly directed shaped region along an outer wall delimiting the housing (12), wherein the coolant channel (13) has an opening (14) which is directed in the direction of the inner volume of the housing (12) and via which the coolant channel (13) is in fluid communication with the inner volume (23) of the housing (12), **characterised in that** the opening (14) is at least partially covered by a panel (5), wherein the panel (5) is disposed on the inwardly directed surface of the outer wall of the housing (12), which has the coolant channel (13), wherein a gap (18, 25) is formed between an edge (19), delimiting the opening (14), and the panel (5).

2. The heat exchanger (1) according to claim 1, **characterised in that** the coolant channel (13) is disposed at a first end region (28) of the housing (12), said region being closed off by one of the tube sheets (3).

3. The heat exchanger (1) according to one of the preceding claims, **characterised in that** the width of the gap between the panel (26) and the edge, delimiting the opening, increases or decreases in the direction of the main extension direction of the coolant channel.

4. The heat exchanger (1) according to claim 2, **characterised in that** the opening (14) has a rectangular cross-section, wherein the gap (18, 25) is formed between the panel (5) and the edge (19) delimiting the opening (14) and facing the first end region (28) of the housing (12).

5. The heat exchanger (1) according to one of the preceding claims, **characterised in that** the panel (5, 26) is formed by a planar, plate-like element.

6. The heat exchanger (1) according to one of the preceding claims, **characterised in that** the outer wall of the housing (12), said wall having the cooling channel (13), on its inner side at the edge (19), delimiting the opening (14), has an at least partially circumferential depression (29) into which the panel (5) can be inserted.

7. The heat exchanger (1) according to one of the preceding claims, **characterised in that** the coolant channel (13) is in fluid communication with a fluid connection (6, 7) disposed in the extension of the coolant channel (13), wherein the fluid connection (6, 7) is formed as a fluid inlet (7) or as a fluid outlet (6).

8. The heat exchanger (1) according to claim 7, **characterised in that** the fluid connection (6, 7) is in fluid communication with the coolant channel (13) via a funnel-shaped area, wherein the flowing of the coolant between the inner volume (23) of the heat exchanger (1) and the fluid connection (6, 7) occurs entirely via the coolant channel (13).

9. The heat exchanger (1) according to one of the preceding claims, **characterised in that** the coolant channel (13) is completely covered by the panel (5) in the direction of its main extension direction.

10. The heat exchanger (1) according to one of the preceding claims, **characterised in that** the housing (12) has two coolant channels (13), wherein one of the coolant channels is in fluid communication with a fluid outlet (6) and the other coolant channel is in fluid communication with a fluid inlet (7), wherein one or both coolant channels (13) are at least partially covered by a panel (5).

## Revendications

1. Echangeur de chaleur (1) servant au refroidissement d'un flux de milieux en circulation, ledit échangeur de chaleur comprenant une pluralité de tubes (4), où les tubes (4) sont logés à chaque fois, côté extrémité, dans un plateau à tubes (2, 3), où les tubes (4) sont logés, entre les deux plateaux à tubes (2, 3), dans un carter (12) qui est relié aux plateaux à tubes (2, 3) en étant étanche aux fluides, où, le long d'une paroi extérieure délimitant le carter (12), un conduit de liquide de refroidissement (13) est formé à travers une partie matricée en saillie, tournée vers l'extérieur, où le conduit de liquide de refroidissement (13) présente une ouverture (14) orientée en direction du volume intérieur du carter (12), ouverture par laquelle le conduit de liquide de refroidissement (13) est en communication fluidique avec le volume intérieur (23) du carter (12), **caractérisé en ce que** l'ouverture (14) est recouverte au moins en partie par un obturateur (5), où l'obturateur (5) est disposé sur une surface - tournée vers l'intérieur - de la paroi extérieure du carter (12), laquelle surface présente le conduit de liquide de refroidissement (13), où un intervalle (18, 25) est formé entre un bord (19) délimitant l'ouverture (14), et l'obturateur (5).

2. Echangeur de chaleur (1) selon la revendication 1, **caractérisé en ce que** le conduit de liquide de refroidissement (13) est disposé sur une première zone d'extrémité (28) du carter (12), ladite première zone d'extrémité étant fermée par l'un des plateaux à tubes (3).

3. Echangeur de chaleur (1) selon l'une des revendications précédentes, **caractérisé en ce que** la largeur de l'intervalle formé entre l'obturateur (26) et le bord délimitant l'ouverture augmente ou diminue en suivant la direction d'étendue principale du conduit de liquide de refroidissement.

4. Echangeur de chaleur (1) selon la revendication 2, **caractérisé en ce que** l'ouverture (14) présente une section rectangulaire, où l'intervalle (18, 25) est formé entre l'obturateur (5) et le bord (19) délimitant l'ouverture (14), bord qui est tourné vers la première zone d'extrémité (28) du carter (12).

5. Echangeur de chaleur (1) selon l'une quelconque des revendications précédentes, **caractérisé en ce que** l'obturateur (5, 26) est formé par un élément plan en forme de plaque.

6. Echangeur de chaleur (1) selon l'une quelconque des revendications précédentes, **caractérisé en ce que** la paroi extérieure du carter (12) présentant le conduit de liquide de refroidissement (13) présente, sur le côté intérieur de ladite paroi extérieure, au niveau du bord (19) délimitant l'ouverture (14), une partie en creux (29) au moins partiellement circulaire, partie en creux dans laquelle peut être introduit l'obturateur (5).

7. Echangeur de chaleur (1) selon l'une quelconque des revendications précédentes, **caractérisé en ce que** le conduit de liquide de refroidissement (13) est en communication fluidique avec un raccord de fluide (6, 7) disposé dans le prolongement du conduit de liquide de refroidissement (13), où le raccord de fluide (6, 7) est conçu comme une entrée de fluide (7) ou comme une sortie de fluide (6).

8. Echangeur de chaleur (1) selon la revendication 7, **caractérisé en ce que** le raccord de fluide (6, 7) est en communication fluidique avec le conduit de liquide de refroidissement (13), à travers une zone en forme d'entonnoir, où un écoulement du liquide de refroidissement, entre le volume intérieur (23) de l'échangeur de chaleur (1) et le raccord de fluide (6, 7), se produit en passant complètement par le conduit de liquide de refroidissement (13).

9. Echangeur de chaleur (1) selon l'une quelconque des revendications précédentes, **caractérisé en ce que** le conduit de liquide de refroidissement (13) est recouvert en totalité par l'obturateur (5), en suivant la direction d'étendue principale dudit conduit de liquide de refroidissement.

10. Echangeur de chaleur (1) selon l'une quelconque des revendications précédentes, **caractérisé en ce que** le carter (12) présente deux conduits de liquide de refroidissement (13), où l'un des conduits de liquide de refroidissement est en communication fluidique avec une sortie de fluide (6), et l'autre conduit de liquide de refroidissement est en communication fluidique avec une entrée de fluide (7), où l'un des conduits de liquide de refroidissement (13), ou bien les deux, est ou sont au moins en partie recouvert(s) par un obturateur (5).
